# EUROPEAN PATENT APPLICATION

(11) **EP 4 518 432 A1**
(43) Date of publication of application: **05.03.2025**
(21) Application number: 23795045.6
(22) Date of filing: 13.04.2023
(51) Int. Cl.: H04W 36/08, H04W 48/16

(54) **TERMINAL NAS AND AS PROCESSING METHOD AND APPARATUS, DEVICE, AND STORAGE MEDIUM**

(30) Priority: 25.04.2022 CN 202210444482
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Xu, Beijing 100032 (CN); CHAI, Li, Beijing 100032 (CN)
(74) Representative: Maiwald GmbH
(86) International application number: PCT/CN2023/088050
(87) International publication number: WO 2023/207612

(57) **Abstract**

The present application discloses a terminal NAS and AS processing method and apparatus, a device, and a storage medium, The method comprises: a terminal NAS receives a specific cause value from a first network, the specific cause value indicating that the network cannot serve at the current terminal location, the terminal NAS stores a geographic location and an identifier of the first network, the geographic location being a geographic location of the terminal when the first network receives the specific cause value, the terminal NAS provides first information comprising the geographical location to a terminal AS: and the terminal AS selects a cell according to the first information.

## Description

### CROSS-REFERENCE TO RELATED APPLICATIONS

This application claims the benefit of priority to Chinese Patent Application No. 202210444482.4, filed on April 25, 2022, the entire contents of which are incorporated herein by reference for all purposes.

### TECHNICAL FIELD

The application relates to the field of communication technology and relates to, but is not limited to a processing method and a processing apparatus of a non access stratum (NAS) and an access stratum (AS) of a terminal, a device, and a storage medium.

### BACKGROUND

A terminal, i.e., a user equipment (UE), includes a non access stratum (NAS) and an access stratum (AS). The NAS of the terminal is configured to process an interaction process between the UE and a core network. The AS of the terminal is configured to process an interaction process between the UE and a wireless network.

A terminal in an idle state is configured to perform a public land mobile network (PLMN) selection, a cell selection, and a cell reselection.

The PLMN includes at least a terrestrial network (TN) and a non terrestrial network (NTN). Before the NTN access (such as a satellite access) is considered in a mobile network, a coverage area of a wireless cell and a tracking area (TA) in a wireless network is relatively fixed for the TN.

After the satellite access is introduced, a moving cell and a cell appear in the mobile network with the satellite access (i.e., the NTN), a coverage area of which is much larger than a coverage area of a cell in the TN. Thus, the complexity of network selection by the terminal is greatly increased, and a situation occurs that the network selected by the terminal in a geographic border area may not be able to provide service for the user.

### SUMMARY

In view of the above, the processing method and the processing apparatus of a non access stratum (NAS) and an access stratum (AS) of a terminal, the device, and the storage medium according to the disclosure are capable of not selecting a cell that covers a geographic location that is not served by the network and an area related to the geographic location, when searching for a cell. Thus, a situation is avoided that the terminal is rejected, logged out or unable to use the service from the network in the geographic location and the area related to the geographic location , and the user experience is improved.

According to an aspect in an embodiment of the disclosure, a processing method of an NAS and an AS of a terminal is provided. The method includes: receiving by the NAS of the terminal, a specific cause value from a first network, in which the specific cause value indicates that a network is not allowed to operate at a current terminal location; saving by the NAS of the terminal, a geographic location and an identification (ID) of the first network, in which the geographic location is a geographic location of the terminal in response to receiving the specific cause value from the first network; and providing by the NAS of the terminal, first information that includes the geographic location for the AS of the terminal. Thus, a possibility that a network where a searched cell is located is not allowed to operate the terminal is reduced when searching for the cell.

A processing apparatus of an NAS and an AS of a terminal is provided in an embodiment of the disclosure. The apparatus includes: an NAS, configured to receive a specific cause value from a first network, in which the specific cause value indicates that the first network is not allowed to operate at a current terminal location; and save a geographic location and an ID of the first network, in which the geographic location is a geographic location of the terminal in response to receiving the specific cause value from the first network; and provide first information that includes the geographic location for an AS of the terminal; and an AS, configured to select a cell based on the first information.

A user equipment (UE) is provided in an embodiment of the disclosure. The UE includes: a processor, and a memory storing a computer program executable by the processor, in which when the computer program is executed by the processor, the method in the embodiment of the disclosure is implemented.

A computer-readable storage medium is provided in an embodiment of the disclosure. The computer-readable storage medium having stored a computer program that, when executed by a processor, implements the method in the embodiment of the disclosure.

It should be understood that the above general description and the following detailed description are only exemplary and explanatory, and do not limit embodiments of the present disclosure.

### BRIEF DESCRIPTION OF THE DRAWINGS

The figures herein are incorporated into the specification and constitute a part of the specification, showing that they conform to the embodiments of the disclosure, and are used together with the specification to explain the principles of the embodiments of the disclosure. Obviously, the drawings in the following description are only some embodiments of the disclosure. For those skilled in the art, other drawings can be obtained based on these drawings without creative works.

The flowcharts shown in the accompanying drawings are illustrative only, do not necessarily include all the content and operations/steps, do not need to be performed in the order as depicted. For example, some operations/steps may also be broken down, while others may be combined or partially combined, so the actual order of execution may change depending on the actual situation.
FIG. 1 is a flowchart illustrating a processing method of a non access stratum (NAS) and an access stratum (AS) of a terminal according to an embodiment of the disclosure.
FIG. 2 is a diagram illustrating an architecture of a processing apparatus according to an embodiment of the disclosure.
FIG. 3 is a diagram illustrating an architecture of a user equipment (UE) according to an embodiment of the disclosure.

### DETAILED DESCRIPTION

In order to make the purpose, technical solutions and advantages of the embodiments of the disclosure clearer, the specific technical solutions of the disclosure will be described in further detail below in conjunction with the accompanying drawings in the embodiments of the disclosure. The following embodiments are used to illustrate the disclosure, but are not intended to limit the scope of the disclosure.

Unless otherwise defined, all technical and scientific terms used herein have the same meaning as generally understood by those skilled in the art belonging to the disclosure . The terms used herein are for the purpose of describing embodiments of the disclosure only and are not intended to limit the disclosure.

In the following description, the term "some embodiments" is used to describe a subset of all possible embodiments. It may be understood that, however, that "some embodiments" may be the same subset or a different subset of all possible embodiments and may be combined with each other without conflicts.

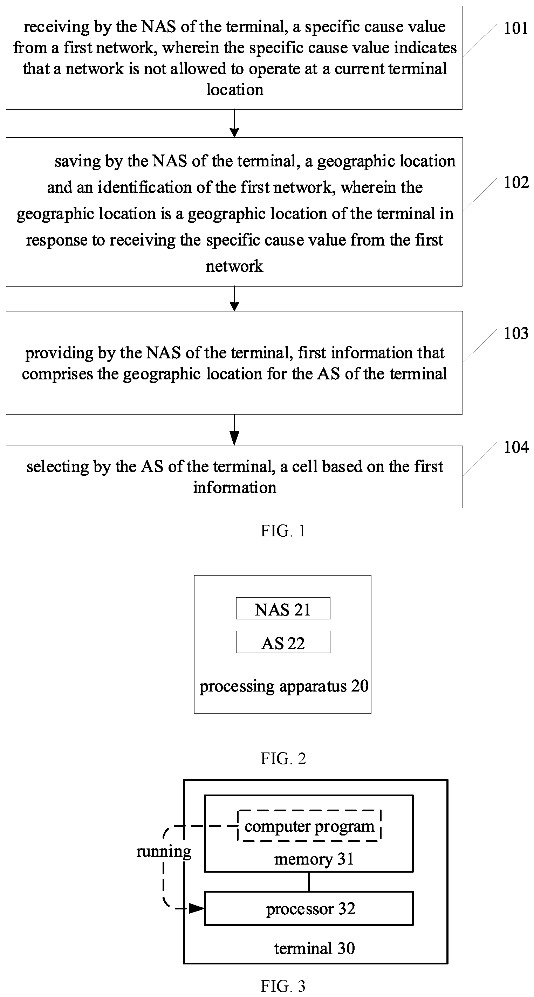

A processing method of a non access stratum (NAS) and an access stratum (AS) of a terminal is provided in an embodiment of the disclosure. FIG. 1 is a flowchart illustrating a processing method of an NAS and an AS of a terminal according to an embodiment of the disclosure. As shown in FIG. 1, the method may include the following steps 101 to 104.

At step 101, the NAS of the terminal receives a specific cause value from a first network, in which the specific cause value indicates that a network is not allowed to operate at a current terminal location.

At step 102, the NAS of the terminal saves a geographic location and an ID of the first network, in which the geographic location is a geographic location of the terminal in response to receiving the specific cause value from the first network.

At step 103, the NAS of the terminal provides first information that includes the geographic location for the AS of the terminal.

At step 104, the AS of the terminal searches for (or selects) a cell based on the first information.

The search for a cell can be used to select a cell.

In an embodiment of the disclosure, when searching for the cell and considering whether a cell is a suitable cell or an acceptable cell, the AS of the terminal considers first information that includes the geographic location. The geographic location is a geographic location of the terminal in response to receiving the specific cause value from the first network. Thus, a possibility that a network where a searched cell is located is not allowed to serve the terminal is reduced when searching for the cell.

It should be noted that, searching for a cell based on the first information by the AS of the terminal at step 104 refers to that the AS of the terminal considers first information that includes the geographic location when considering whether a cell is a suitable cell or an acceptable cell.

In some embodiments, searching for the cell by the AS of the terminal includes: searching for the cell during a cell selection process or a cell reselection process by the terminal.

In some embodiments, the cell searched for is a cell of a terminal registration network or a cell of an equivalent public land mobile network (EPLMN) of the terminal registration network.

In some embodiments, the terminal accesses the first network through satellite next generation radio access network (NG-RAN) access technology; and the cell searched for by the terminal is a cell that supports the satellite NG-RAN access technology. In some embodiments, during the cell selection process or the cell reselection process, the cell searched for by the terminal is a cell that supports the satellite NG-RAN access technology.

It may be understood that after the satellite access is introduced, a moving cell appears in the mobile network with the satellite access (i.e., the non terrestrial network (NTN)), a coverage area of which is much larger than that a coverage area of a cell in the terrestrial network (TN). A cell selected by a terminal at a geographic border area belongs to a network A with the satellite access that is not allowed to operate in the geographic border area, which results in a failure of registration of the terminal, and the terminal is unable to successfully register to the network A in the cell selected by the terminal. In some embodiments, the first information further includes the ID of the first network.

In some embodiments, saving by the NAS of the terminal, the geographic location and the ID of the first network includes: saving by the NAS of the terminal, the geographic location of the terminal in response to receiving the specific cause value from the first network and the ID of the first network in a list of networks that are not allowed to operate.

In some embodiments, providing by the NAS of the terminal, the first information that includes the geographic location for the AS of the terminal includes one of: providing by the NAS of the terminal, the geographic location for the AS of the terminal; providing by the NAS of the terminal, the geographic location and the ID of the first network for the AS of the terminal; providing by the NAS of the terminal, all geographic locations and corresponding network IDs in a list of networks that are not allowed to operate, for the AS of the terminal; or providing by the NAS of the terminal, the list of networks that are not allowed to operate for the AS of the terminal.

On this basis, in some embodiments, when the AS performs the cell selection process or the cell reselection process in an idle state, the followings are considered by the AS: all geographic locations and corresponding network IDs in the list of networks that are not allowed to operate, the geographic location and the ID of the first network, or all geographic locations and corresponding network IDs in the list of networks that are not allowed to operate.

In some embodiments, the geographic location and the ID of the first network may be saved as an entry in the list of networks that are not allowed to operate.

In some embodiments, in response to determining that the NAS of the terminal receives the specific cause value again, updating by the NAS of the terminal a list of networks that are not allowed to operate includes one of: providing by the NAS of the terminal, a new geographic location for the AS of the terminal; in response to determining that a network that sends the specific cause value received again is different from the first network, saving by the NAS of the terminal, a new geographic location and an ID of the network in the list of networks that are not allowed to operate, in which the new geographic location is a geographic location of the terminal in response to receiving the specific cause value again; or in response to determining that a network that sends the specific cause value received again is the first network, deleting by the NAS of the terminal, the ID of the first network and the geographic location in response to receiving the specific cause value from the first network, from the list of networks that are not allowed to operate, and saving by the NAS of the terminal, a new geographic location and the ID of the first network in the list of networks that are not allowed to operate, in which the new geographic location is a geographic location of the terminal in response to receiving the specific cause value again from the first network.

In some embodiments, after the NAS of the terminal updates the list of networks that are not allowed to operate, the NAS of the terminal provides first information that includes the new geographic location for the AS of the terminal.

In some embodiments, after the terminal selects the first network, processing of the NAS of the terminal includes one of: providing by the NAS of the terminal, the first information that includes the geographic location for the AS of the terminal; providing by the NAS of the terminal, the geographic location for the AS of the terminal; providing by the NAS of the terminal, the geographic location and the ID of the first network for the AS of the terminal; providing by the NAS of the terminal, all geographic locations and corresponding network IDs in a list of networks that are not allowed to operate, for the AS of the terminal; or providing by the NAS of the terminal, a list of networks that are not allowed to operate, for the AS of the terminal.

It may be understood that after selecting the first network, the terminal may subsequently select a cell. Thus, the above processing by the NAS of the terminal enables the terminal to avoid the geographic location as much as possible when selecting a cell, which increases the possibility that the terminal successfully registers to the first network based on the selected cell.

In some embodiments, after the terminal successfully registers to the first network, the geographic location and the ID of the first network are not deleted from the list of networks that are not allowed to operate. Thus, the terminal may make reference to the geographic location when performing the cell selection or the cell reselection subsequently, and avoid/keep away from the geographic location as much as possible.

In some embodiments, selecting by the AS of the terminal, the cell based on the first information includes one of: considering by the AS of the terminal, a condition that a cell is a suitable cell includes the geographic location; considering by the AS of the terminal, a condition that a cell is a suitable cell includes the geographic location and the ID of the first network; or considering by the AS of the terminal, a condition that a cell is a suitable cell includes a list of networks that are not allowed to operate.

Further, in some embodiments, when a cell is within a geographic area for the list of networks that are not allowed to operate, the cell is not considered as the suitable cell.

In some embodiments, selecting by the AS of the terminal the cell based on the first information includes one of: considering by the AS of the terminal, a condition that a cell is an acceptable cell includes the geographic location; considering by the AS of the terminal, a condition that a cell is an acceptable cell comprises the geographic location and the ID of the first network; or considering by the AS of the terminal, a condition that a cell is an acceptable cell includes a list of networks that are not allowed to operate.

In some embodiments, when a cell is within a geographic area for the list of networks that are not allowed to operate, the cell is not considered as the suitable cell.

In some embodiments, a cell is considered as a suitable cell in one of the following situations (1)-(4).
(1) A cell is not within an area related to a list of networks that are not allowed to operate (i.e., a list of "PLMNs not allowed to operate at the present UE location"). The area related to the list of networks that are not allowed to operate (i.e., a list of "PLMNs not allowed to operate at the present UE location") refers to an area with a distance from a geographic location in the list of networks that are not allowed to operate being less than a specific distance. In the list of networks that are not allowed to operate, a network ID corresponds to a geographic location and an area related to a network that is not allowed to operate.
(2) A tracking area (TA) broadcast by a cell is not a part of an area related to a list of networks that are not allowed to operate. The TA is an area of a network. The TA being not a part of the area related to a list of networks that are not allowed to operate refers to that the TA is not in an area related to a corresponding network in the list of networks that are not allowed to operate.
(3) A TA broadcast by a cell does not include the geographic location in the first information. The TA is an area of a network. The TA not including the geographic location in the first information refers to the TA that the cell is located not including the geographic location corresponding to the network.
(4) A network ID broadcast by a cell is the ID of the first network in the first information, and an area of a cell is not overlapped with the geographic location in the first information. The not overlapped situation refers to that the area covered by the cell is not overlapped with the geographic location corresponding to the network in which the cell is located.

In some embodiments, a cell is considered as an acceptable cell in one of the following situations (1)-(4).
(1) A cell is not within an area related to a list of networks that are not allowed to operate.
(2) A tracking area (TA) broadcast by a cell is not a part of an area related to a list of networks that are not allowed to operate.
(3) A TA broadcast by a cell does not include the geographic location in the first information.
(4) A network ID broadcast by a cell is the ID of the first network in the first information, and an area of a cell is not overlapped with the geographic location in the first information.

In some embodiments, the area related to the list of networks that are not allowed to operate refers to an area with a distance from a geographic location in the list of networks that are not allowed to operate being less than a specific distance.

In some embodiments, the TA broadcast by the cell not including the geographic location in the first information includes: the TA broadcast by the cell not including an area related to the geographic location in the first information.

In some embodiments, the network ID broadcast by the cell being the ID of the first network in the first information, and the area of the cell being not overlapped with the geographic location in the first information includes: the network ID broadcast by the cell being the ID of the first network in the first information and the area of the cell being not overlapped with an area related to the geographic location in the first information.

In some embodiments, the area related to the geographic location refers to an area with a distance from the geographic location being less than a specific distance.

In some embodiments, the AS of the terminal selects the cell based on the first information and at least one of: wireless network coverage information; a relationship between the cell and the geographic location; or a specific distance set based on the geographic location.

In some embodiments, the wireless network coverage information, the relationship between the cell and the geographic location, and the specific distance are obtained from at least one of: a terminal, a wireless network, or a core network.

In some embodiments, the wireless network may be an NG-RAN.

In some embodiments, in response to obtaining the wireless network coverage information, the relationship between the cell and the geographic location, and the specific distance from the wireless network, the terminal obtains the wireless network coverage information, the relationship between the cell and the geographic location, and the specific distance based on a broadcast message or other wireless network signaling messages sent by the wireless network.

In some embodiments, in response to obtaining the wireless network coverage information, the relationship between the cell and the geographic location, and the specific distance from the core network, the terminal obtains the wireless network coverage information, the relationship between the cell and the geographic location, and the specific distance based on an access strategy, a registration process, or a generic terminal configuration updating program sent by the core network.

In some embodiments, the specific distance is one of: a distance provided by the NAS of the terminal; or a distance set by the AS of the terminal.

In some embodiments, the distance provided by the NAS of the terminal may be set based on a coverage area of the first network.

In some embodiments, the distance set by the AS of the terminal may be set based on a coverage area of the cell for the geographic location.

In some embodiments, the distance set by the AS of the terminal may be determined based on the distance provided by the NAS of the terminal. The distance set by the AS of the terminal is less than or equal to the distance provided by the NAS of the terminal.

The terminal includes an NAS and an AS. The NAS of the terminal is configured to process an interaction process between the terminal and the core network. The AS of the terminal is configured to process an interaction process between the terminal and the wireless network.

A terminal in an idle state is configured to perform a PLMN selection, a cell selection, and a cell reselection. The PLMN selection is performed by the NAS of the terminal after the AS of the terminal reports cell information, which may involve in a plurality of interactions between the NAS of the terminal and the AS of the terminal. The cell selection and cell reselection are performed by the AS of the terminal after the NAS of the terminal provides a policy.

Before the NTN access (such as a satellite access) is considered in a mobile network, the coverage area of a wireless cell and a TA in a wireless network has a relatively fixed a geographic location for the TN.

After the satellite access is introduced, a moving cell and a cell appear in the mobile network with the satellite access (i.e., the NTN), a coverage area of which is much larger than a coverage area of a cell in the TN. Thus, the complexity of network selection by the terminal is greatly increased, and a situation occurs that the network selected by the terminal in a geographic border area may not be able to provide service for the user.

In view of the problem, a network selected by the UE may locate the user in a UE connection state. When the network is not allowed to provide service for the user, a specific cause value is returned to the UE that indicates that the network is not allowed to provide service for the user at the current terminal location. The UE records the current location according to the indication, leaves the current network, enters an idle state and selects another available network. The terminal may attempt the network again, if the network can serve the user, the registration is successful, and if the attempt fails, a new location is recorded.

Based on the above, an exemplary application of the embodiments of the disclosure in a practical application scenario is described below.

In an embodiment of the disclosure, the UE needs to consider a geographic location where the first network is not allowed to operate when selecting the first network, and also needs to consider the geographic location when performing the cell selection or the cell reselection. That is, the geographic location where the first network is not allowed to operate and a selection strategy based on the geographic location need to be considered.

One of the networks may be deleted from the list of networks that are not allowed to operate (the list is maintained by the UE) under certain conditions, e.g., when a network is attempted again and the attempt is successful, the network is deleted from the list. If it is desired that an entry corresponding to a first network in the list is configured for performing the cell selection/reselection in the cell of this first network, the conditions for deleting the entry in the list need to be restricted, e.g., when the entry contains the geographic location, the entry is retained, i.e., the geographic location where the first network is not allowed to operate is retained.

A selection strategy based on the location includes wireless network coverage information, a mapping relationship between a cell and the geographic location and a specific distance, etc.

The mapping relationship between a cell and the geographic location is related to a wireless network planning. The ratio between the geographic location and the cell which can be selected by the geographic location is not necessarily 1:1. The safe area of the first network which may be registered successfully is not a specific location, and a specific distance needs to be considered.

Another processing method of an NAS and an AS of a terminal is provided in an embodiment of the disclosure. The method may include the following steps 201 to 204 (the accompanying drawings are not illustrated).

At step 201, after the NAS selects a first network (which is an NTN with the satellite access), a specific cause value of the first network is received. The UE records an ID of the first network, the geographic location, a first specific distance (distance provided by the NAS of the terminal), and an interval time as an entry in the list of networks that are not allowed to operate.

At step 202, the UE in an idle state determines whether the first specific distance and the interval time satisfy a condition. If the condition is satisfied, the first network is attempted (i.e., selected) again.

At step 203, the UE enters a network selection process. After the NAS selects the first network, the entry corresponding to the first network, i.e., the ID of the first network, location information for the first network that is not allowed to operate and/or the first specific distance (distance provided by the NAS of the terminal) and/or the interval time, is not deleted from the list of networks that are not allowed to operate. The geographic location is transmitted from the NAS to the AS.

At step 204, the AS selects a suitable cell based on the location information for the first network that is not allowed to operate, the wireless network coverage information and the mapping relationship between a cell and the geographic location transmitted by the NAS during the cell selection. The AS avoids the geographic location and retains a second specific distance (the distance set by the AS of the terminal).

The AS of the terminal reads broadcast message from the wireless network and measures a wireless signal during the cell selection. The AS of the terminal obtains the wireless network coverage information by measuring the wireless signal, and obtains the mapping relationship by reading the broadcast message.

The first specific distance is different from the second specific distance. The first specific distance considers a re-initiate registration to the first network and the coverage of the first network. The re-initiate registration to the first network may be attempted in any cell of the first network. The second specific distance considers a coverage of the cell, and it is only necessary to ensure that the distance exceeds the coverage of the cell.

At step 205, after the cell selection is completed, the UE enters the connection state and registers to the first network. After successfully registering to the first network, the UE enters the idle state.

At step 206, after the UE successfully registers to the first network, the entry corresponding to the first network, i.e., the ID of the first network, the location information for the first network that is not allowed to operate and/or the first specific distance and/or the interval time, is not deleted from the list of networks that are not allowed to operate.

At step 207, since the entry corresponding to the first network is not deleted, the AS of the terminal selects a suitable cell based on the second specific distance, the geographic location, the wireless network coverage information, and the mapping relationship between a cell and the geographic location during the cell reselection. The AS avoids the geographic location and retains the second specific distance.

The AS of the terminal reads broadcast message from the wireless network and measures a wireless signal during the cell reselection. The AS of the terminal obtains the wireless network coverage information by measuring the wireless signal, and obtains the mapping relationship by reading the broadcast message.

The first specific distance is different from the second specific distance. The first specific distance considers a re-initiate registration to the first network and the coverage of the first network. The re-initiate registration to the first network may be attempted in any cell of the first network. The second specific distance considers a coverage of the cell, and it is only necessary to ensure that the distance exceeds the coverage of the cell.

On the other hand, since the UE is successfully registered to the first network and is already passed the authentication of the first network as a trusted UE, a specific access strategy may be sent to the UE. The network may send the access strategy based on the location of the first UE. The access strategy may include wireless network coverage information on an area related to the location of the first UE, a mapping relationship between the cell and the geographic location. In addition, the access strategy may provide a third specific distance (a specific distance carried in the access strategy sent by the core network).

The first information is transmitted from the NAS of the terminal to the AS of the terminal, and the first specific distance is set by the NAS of the terminal.

The NAS of the terminal retains (does not delete) the geographic location and the ID of the first network when a registration to the first network is initiated. After the terminal selects the first network, the NAS of the terminal provides the geographic location for the AS of the terminal, or the NAS of the terminal provides the geographic location and the ID of the first network for the AS of the terminal.

After the AS of the terminal receives the geographic location, strategies of a cell selection/a cell reselection based on the geographic location are generated based on the wireless network coverage information, the mapping relationship between the cell and the geographic location, and etc. The generated strategies of the cell selection and the cell reselection are different (the cell selection is based on the geographic location, a wireless signal measurement, and a broadcast message; the cell reselection may be based on a capability of the UE, a capability of the radio access network, or the access policy sent by the first network).

The AS of the terminal applies strategies of the cell selection/ the cell reselection strategy based on the geographic location during the cell selection and the cell reselection in the first network.

The geographic location where the first network is not allowed to operate is considered in the cell selection/reselection. An area that there may be a rejection is avoided to be selected when re-attempting of registration to the first network after the UE receives a network indication. An area that there may be a rejection or a logout is avoided to be selected after registration to the first network is successful. The success rate of registration to the first network is ensured, and the logout caused by UE mobility after registration to the first network is avoided.

The list of networks that are not allowed to operate may be a list of "PLMNs not allowed to operate at the present UE location". The list is in the NAS of the terminal of the UE and includes a plurality of entries, each of which corresponds to a record. Each record includes an ID of the network and a geographic location where the UE receives the network indication in the satellite access way.

It should be noted that although the various steps of the method in the disclosure are depicted in the accompanying drawings in a particular order, it is not required or implied that the steps must be performed in that particular order, or that all of the steps shown must be performed in an order to achieve the desired result. Additionally or alternatively, certain steps may be omitted, a plurality of steps may be combined as a single step for execution, and/or a single step may be broken down as a plurality of steps for execution, etc.; or steps in different embodiments may be combined to form a new technical solution.

Based on the foregoing embodiments, a processing apparatus is provided in an embodiment of the disclosure. The apparatus includes various modules, and various units included in the modules. The apparatus may be implemented by a processor, or may also be implemented by specific logic circuits. In the implementation, the processor may be a central processing unit (CPU), a microprocessor unit (MPU), a digital signal processor (DSP), or a field programmable gate array (FPGA) and so on.

FIG. 2 is a diagram illustrating an architecture of a processing apparatus according to an embodiment of the disclosure. As shown in FIG. 2, the processing apparatus includes an NAS 21 and an AS 22.

The NAS 21 is configured to receive a specific cause value from a first network, in which the specific cause value indicates that a network is not allowed to operate at a current terminal location; and save a geographic location and an ID of the first network, in which the geographic location is a geographic location of the terminal in response to receiving the specific cause value from the first network; and provide first information that includes the geographic location for the AS of the terminal.

The AS 22 is configured to search for (or select) a cell based on the first information.

In some embodiments, the AS 22 is configured to search for the cell during a cell selection process or a cell reselection process.

In some embodiments, the cell searched for is a cell of a terminal registration network or a cell of an EPLMN of the terminal registration network.

In some embodiments, the terminal accesses the first network through satellite NG-RAN access technology; during the cell selection process or the cell reselection process, the cell searched for by the terminal is a cell that supports the satellite NG-RAN access technology.

In some embodiments, the first information further includes the ID of the first network.

In some embodiments, the NAS 21 is configured to save the geographic location of the terminal in response to receiving the specific cause value from the first network and the ID of the first network in a list of networks that are not allowed to operate.

In some embodiments, the NAS 21 is configured to provide the geographic location for the AS 22; provide the geographic location and the ID of the first network for the AS 22; provide all geographic locations and corresponding network IDs in a list of networks that are not allowed to operate, for the AS 22; and, provide the list of networks that are not allowed to operate for the AS 22.

In some embodiments, the NAS 21 is further configured to, in response to determining that the NAS 21 receives the specific cause value again, update a list of networks that are not allowed to operate, which includes one of: in response to determining that a network that sends the specific cause value received again is different from the first network, saving a new geographic location and an ID of the network in the list of networks that are not allowed to operate, in which the new geographic location is a geographic location of the terminal in response to receiving the specific cause value again; or in response to determining that a network that sends the specific cause value received again is the first network, deleting the ID of the first network and the geographic location in response to receiving the specific cause value from the first network, from the list of networks that are not allowed to operate, and saving a new geographic location and the ID of the first network in the list of networks that are not allowed to operate, in which the new geographic location is a geographic location of the terminal in response to receiving the specific cause value again from the first network.

In some embodiments, the AS 22 is configured to select a cell based on the first information and at least one of: wireless network coverage information; a relationship between the cell and the geographic location; or a specific distance set based on the geographic location.

In some embodiments, the wireless network coverage information, the relationship between the cell and the geographic location, and the specific distance are obtained from at least one of: a terminal, a wireless network, or a core network.

In some embodiments, the NAS 21 or the AS 22 is further configured to, in response to obtaining the wireless network coverage information, the relationship between the cell and the geographic location, and the specific distance from the wireless network, obtain the wireless network coverage information, the relationship between the cell and the geographic location, and the specific distance based on a broadcast message or other wireless network signaling messages sent by the wireless network.

In some embodiments, the NAS 21 or the AS 22 is further configured to, in response to obtaining the wireless network coverage information, the relationship between the cell and the geographic location, and the specific distance from the core network, obtain the wireless network coverage information, the relationship between the cell and the geographic location, and the specific distance based on an access strategy, a registration process, or a generic terminal configuration updating program sent by the core network.

In some embodiments, the specific distance is one of: a distance provided by the NAS of the terminal; a distance set by the AS of the terminal.

The above description of the device embodiments are similar to the above description of the method embodiments and have similar beneficial effects as the method embodiments. Technical details not disclosed in the apparatus embodiments of the disclosure can be referred to the description of the method embodiments of the disclosure for understanding.

It should be noted that the division of modules by the processing apparatus shown in FIG. 2 in the embodiment of the disclosure is exemplary. For example, the division of the modules is merely a logical function division. There may be other division methods in actual implementation. In addition, functional units in embodiments of the application may be integrated in a processing unit, or may be physically separated and existed, or two or more units may be integrated in one unit. The above integrated unit may be implemented in the form of a hardware or in the form of a hardware and a software function unit.

It should be noted that in the embodiments of the disclosure, if the processing method of an NAS and an AS of a terminal is implemented in the form of a software function module, sold and used as an independent product, it may be stored in a computer readable storage medium. On the basis of such an understanding, the essential technical solution in the disclosure, or a part of the technical solution contributing to the related art may be embodied in the form of a software product. The computer software product is stored in a storage medium, including several instructions configured to cause the UE to perform all or part of the steps in various embodiments of the disclosure. The forgoing medium includes a USB disk, a mobile hard disk, a Read-Only Memory (ROM), a Random Access Memory (RAM), a magnetic disk or an optical disk, and other media that may store program codes. In this way, embodiments of the disclosure are not limited to any particular combination of hardware and software.

A terminal is provided in an embodiment of the disclosure. FIG. 3 is a diagram illustrating a hardware entity of the terminal according to an embodiment of the disclosure. As shown in FIG. 3, the terminal 30 includes a memory 31 and a processor 32. The memory 31 stores a computer program executable by the processor 32, in which when the computer program is executed by the processor 32, the steps as described in the above methods are implemented.

It should be noted that the memory 31 is configured to store instructions and applications executable by the processor 32, and may also cache data (e.g., image data, audio data, voice communication data, and video communication data) to be processed or already processed by the processor 32 and the modules in the terminal 30, which may be implemented through a flash or a RAM.

A computer-readable storage medium is provided in an embodiment of the disclosure. The computer-readable storage medium having stored a computer program that, when executed by a processor, implements the steps in the processing method of an NAS and an AS of a terminal provided in the above embodiments.

A computer program product is provided in an embodiment of the disclosure. The computer program product having stored instructions that, when running on a computer, cause the computer to implement the steps in the processing method of an NAS and an AS of a terminal provided in the above embodiments.

It should be noted herein that the above description of the storage medium embodiments and the apparatus embodiments are similar to the above description of the method embodiments and have similar beneficial effects as the method embodiments. Technical details not disclosed in the storage medium embodiments, and the apparatus embodiments of the disclosure can be referred to the description of the method embodiments of the disclosure for understanding.

It should be understood that the terms "an embodiment" or "one embodiment" or "some embodiments" throughout the specification mean that a particular feature, structure, or characteristic associated with the embodiments is included in at least one embodiment of the disclosure. Therefore, "in an embodiment" or "in the embodiment" or "in some embodiments" appearing at various places throughout the specification may not necessarily refer to the same embodiment. Moreover, these particular features, structures, or characteristics may be combined in one or more embodiments in any suitable manner. It should be understood that in various embodiments of the disclosure, serial numbers in the above steps/processes does not imply an order for execution, and the order for execution of the steps/processes should be determined by their functions and internal logics, which should not constitute any limitation on the implementation process of the embodiments of the disclosure. The above serial numbers in the embodiments of the disclosure are for the purpose of description only and do not represent the advantages or disadvantages of the embodiments. The foregoing description of the various embodiments tends to emphasize the differences between the various embodiments, the similarities or likenesses of the various embodiments can be referred to each other, which will not be repeated herein for the sake of brevity.

The term "and/or" in this text is simply a way of describing an association relationship of associated objects, indicating that there can be three types of relationships. For example, object A and/or object B may mean: object A exists alone, object A and object B exist at the same time, and object B exists alone.

It needs to be noted that, the terms "include/including", "contain/containing" or any other variations thereof, are intended to cover a non-exclusive inclusion, such that a process, a method, an article or an apparatus including a series of elements not only includes those elements but also includes other elements not expressly listed, or may also include elements inherent to such process, method, article, or apparatus. In the absence of more constraints, the elements defined by a sentence "including one" do not preclude the presence of additional same elements in the process, method, article, or apparatus that includes the elements.

In several embodiments according to the disclosure, it should be understood that the disclosed apparatuses and methods may be implemented in other ways. The apparatus embodiments described above are merely exemplary. For example, the division of the modules is merely a logical function division. There may be other division methods in actual implementation. For example, a plurality of modules or components may be combined, or may be integrated into another system, or some features may be ignored or not executed. In addition, the coupling, direct coupling, or communication connection between the components shown or discussed may be implemented by some interfaces, and indirect coupling or communication connection between the devices or modules may be an electrical connection, a mechanical connection or a connection in other forms.

The above units described as separate parts may or may not be physically separated, the parts shown as units may or may not be physical units, which may be located in one place, or may be distributed to a plurality of network units. Some or all units may be selected according to the actual needs to achieve the purpose of the disclosure.

In addition, all functional units in the embodiments of the disclosure may be integrated into one processing unit, or each unit may be separately configured as a unit, or two or more units may be integrated into one unit. The above-mentioned integrated units may be implemented in the form of hardware or in the form of hardware plus software functional units.

Those skilled in the art may understand that, all or part of the steps of implementing the above-mentioned method embodiments may be completed by hardware related to program instructions, and the above-mentioned programs may be stored in a computer-readable storage medium, The programs implement the steps of the above-mentioned method embodiments when executed. The above-mentioned storage medium includes various media that can store program codes, such as a mobile storage device, a ROM, a RAM, a magnetic disk or an optical disk.

Or, if the integrated units of the disclosure are implemented in the form of a software function module, sold and used as an independent product, they may also be stored in a computer readable storage medium. On the basis of such an understanding, the essential technical solution of the disclosure, or a part of the technical solution contributing to the related art may be embodied in the form of a software product. The computer software product is stored in a storage medium, including several instructions configured to cause the UE to perform all or part of the steps in various embodiments of the disclosure. The forgoing medium includes a ROM, a magnetic disk or an optical disk, and other media that may store program codes.

The methods disclosed in the method embodiments according to the disclosure may be arbitrarily combined without conflicts to obtain new method embodiments.

Features disclosed in the product embodiments according to the disclosure may be arbitrarily combined without conflicts to obtain new product embodiments.

Features disclosed in the method embodiments or the apparatus embodiments according to the disclosure may be arbitrarily combined without conflicts to obtain new method embodiments or apparatus embodiments.

The above is merely a specific embodiment of the disclosure, but the scope of protection of the disclosure is not limited thereto, and any person skilled in the art may easily envisage changing or replacing within the technical scope disclosed in the disclosure, which should be covered within the scope of protection of the disclosure. Therefore, the protection scope of the disclosure shall be subject to the protection scope of the claims.

## Claims

1. A processing method of a non access stratum (NAS) and an access stratum (AS) of a terminal, comprising:
receiving by the NAS of the terminal, a specific cause value from a first network, wherein the specific cause value indicates that a network is not allowed to operate at a current terminal location;
saving by the NAS of the terminal, a geographic location and an identification (ID) of the first network, wherein the geographic location is a geographic location of the terminal in response to receiving the specific cause value from the first network;
providing by the NAS of the terminal, first information that comprises the geographic location for the AS of the terminal; and
selecting by the AS of the terminal, a cell based on the first information.

2. The method according to claim 1, wherein selecting by the AS of the terminal, the cell comprises: searching for the cell during a cell selection process or a cell reselection process by the terminal.

3. The method according to claim 1 or 2, wherein the cell searched for is a cell of a terminal registration network or a cell of an equivalent public land mobile network (EPLMN) of the terminal registration network.

4. The method according to claim 1 or 2, wherein the terminal accesses the first network through satellite next generation radio access network (NG-RAN) access technology; and
the cell searched for by the terminal is a cell that supports the satellite NG-RAN access technology.

5. The method according to claim 1, wherein the first information further comprises the ID of the first network.

6. The method according to claim 1, wherein saving by the NAS of the terminal, the geographic location and the ID of the first network comprises:
saving by the NAS of the terminal, the geographic location of the terminal in response to receiving the specific cause value from the first network and the ID of the first network in a list of networks that are not allowed to operate.

7. The method according to claim 1 or 6, wherein providing by the NAS of the terminal, the first information that comprises the geographic location for the AS of the terminal comprises one of:
providing by the NAS of the terminal, the geographic location for the AS of the terminal;
providing by the NAS of the terminal, the geographic location and the ID of the first network for the AS of the terminal;
providing by the NAS of the terminal, all geographical locations and corresponding network IDs in a list of networks that are not allowed to operate, for the AS of the terminal; or
providing by the NAS of the terminal, the list of networks that are not allowed to operate for the AS of the terminal.

8. The method according to claim 1 or 6, further comprising:
in response to determining that the NAS of the terminal receives the specific cause value again, updating by the NAS of the terminal, a list of networks that are not allowed to operate, which comprises one of:
in response to determining that a network that sends the specific cause value received again is different from the first network, saving by the NAS of the terminal, a new geographic location and an ID of the network in the list of networks that are not allowed to operate, wherein the new geographic location is a geographic location of the terminal in response to receiving the specific cause value again; or
in response to determining that a network that sends the specific cause value received again is the first network, deleting by the NAS of the terminal, the ID of the first network and the geographic location in response to receiving the specific cause value from the first network, from the list of networks that are not allowed to operate, and saving by the NAS of the terminal, a new geographic location and the ID of the first network in the list of networks that are not allowed to operate, wherein the new geographic location is a geographic location of the terminal in response to receiving the specific cause value again from the first network.

9. The method according to claim 8, wherein after updating by the NAS of the terminal, the list of networks that are not allowed to operate, the NAS of the terminal provides first information that comprises the new geographic location for the AS of the terminal.

10. The method according to claim 1 or 6, wherein after selecting the first network by the terminal, processing of the NAS of the terminal comprises one of:
providing by the NAS of the terminal, the first information that comprises the geographic location for the AS of the terminal;
providing by the NAS of the terminal, the geographic location for the AS of the terminal;
providing by the NAS of the terminal, the geographic location and the ID of the first network for the AS of the terminal;
providing by the NAS of the terminal, all geographical locations and corresponding network IDs in a list of networks that are not allowed to operate, for the AS of the terminal; or
providing by the NAS of the terminal, a list of networks that are not allowed to operate, for the AS of the terminal.

11. The method according to claim 1 or 6, wherein after the terminal successfully registers to the first network, the geographic location and the ID of the first network are not deleted from the list of networks that are not allowed to operate.

12. The method according to any one of claims 1, 2, 6, wherein selecting by the AS of the terminal, the cell based on the first information comprises one of:
considering by the AS of the terminal, a condition that a cell is a suitable cell comprises the geographic location;
considering by the AS of the terminal, a condition that a cell is a suitable cell comprises the geographic location and the ID of the first network; or
considering by the AS of the terminal, a condition that a cell is a suitable cell comprises a list of networks that are not allowed to operate.

13. The method according to any one of claims 1, 2, 6, wherein selecting by the AS of the terminal, the cell based on the first information comprises one of:
considering by the AS of the terminal, a condition that a cell is an acceptable cell comprises the geographic location;
considering by the AS of the terminal, a condition that a cell is an acceptable cell comprises the geographic location and the ID of the first network; or
considering by the AS of the terminal, a condition that a cell is an acceptable cell comprises a list of networks that are not allowed to operate.

14. The method according to claim 12, wherein when a cell is within a geographic area for the list of networks that are not allowed to operate, the cell is not considered as the suitable cell.

15. The method according to any one of claims 1, 2, 6, wherein a cell is considered as a suitable cell in one of following situations:
a situation that a cell is not within an area related to a list of networks that are not allowed to operate;
a situation that a tracking area (TA) broadcast by a cell is not a part of an area related to a list of networks that are not allowed to operate;
a situation that a TA broadcast by a cell does not comprise the geographic location in the first information; or
a situation that a network ID broadcast by a cell is the ID of the first network in the first information, and an area of a cell is not overlapped with the geographic location in the first information.

16. The method according to any one of claims 1, 2, 6, wherein a cell is considered as an acceptable cell in one of following situations:
a situation that a cell is not within an area related to a list of networks that are not allowed to operate;
a situation that a tracking area (TA) broadcast by a cell is not a part of an area related to a list of networks that are not allowed to operate;
a situation that a TA broadcast by a cell does not comprise the geographic location in the first information; or
a situation that a network ID broadcast by a cell is the ID of the first network in the first information, and an area of a cell is not overlapped with the geographic location in the first information.

17. The method according to claim 15 or 16, wherein the area related to the list of networks that are not allowed to operate refers to an area with a distance from a geographic location in the list of networks that are not allowed to operate being less than a specific distance.

18. The method according to claim 15 or 16, wherein the TA broadcast by the cell not comprising the geographic location in the first information comprises:
the TA broadcast by the cell not comprising an area related to the geographic location in the first information; and
wherein the network ID broadcast by the cell being the ID of the first network in the first information, and the area of the cell being not overlapped with the geographic location in the first information comprises:
the network ID broadcast by the cell being the ID of the first network in the first information and the area of the cell being not overlapped with an area related to the geographic location in the first information.

19. The method according to claim 18, wherein the area related to the geographic location refers to an area with a distance from the geographic location being less than a specific distance.

20. The method according to claim 1 or 2, wherein the AS of the terminal selects the cell based on the first information and at least one of:
wireless network coverage information;
a relationship between the cell and the geographic location; or
a specific distance set based on the geographic location.

21. The method according to claim 20, wherein the wireless network coverage information, the relationship between the cell and the geographic location, and the specific distance are obtained from at least one of: a terminal, a wireless network, or a core network.

22. The method according to claim 21, wherein in response to obtaining the wireless network coverage information, the relationship between the cell and the geographic location, and the specific distance from the wireless network, the terminal obtains the wireless network coverage information, the relationship between the cell and the geographic location, and the specific distance based on a broadcast message or other wireless network signaling messages sent by the wireless network.

23. The method according to claim 21, wherein in response to obtaining the wireless network coverage information, the relationship between the cell and the geographic location, and the specific distance from the core network, the terminal obtains the wireless network coverage information, the relationship between the cell and the geographic location, and the specific distance based on an access strategy, a registration process, or a generic terminal configuration updating program sent by the core network.

24. The method according to claim 1, 17 or 19, wherein the specific distance is one of:
a distance provided by the NAS of the terminal; or
a distance set by the AS of the terminal.

25. A processing apparatus, comprising:
a non access stratum (NAS), configured to receive a specific cause value from a first network, wherein the specific cause value indicates that a network is not allowed to operate at a current terminal location; and save a geographic location and an identification (ID) of the first network, wherein the geographic location is a geographic location of the terminal in response to receiving the specific cause value from the first network; and provide first information that comprises the geographic location for the AS of the terminal; and
an access stratum (AS), configured to select a cell based on the first information.

26. A terminal, comprising: a processor, and a memory storing a computer program executable by the processor, wherein when the computer program is executed by the processor, the method according to any one of claims 1 to 24 is implemented.

27. A computer-readable storage medium having stored a computer program that, when executed by a processor, implements the method according to any one of claims 1 to 24.
